# EUROPEAN PATENT SPECIFICATION

(11) **EP 3 127 739 B1**
(45) Date of publication and mention of the grant of the patent: **04.12.2019**
(21) Application number: 14887785.5
(22) Date of filing: 03.04.2014
(51) Int. Cl.: B60L 50/51, B60L 58/12, B60L 50/60, B60L 58/15, B60L 9/18, B62M 7/02, B60L 3/00, B60L 3/12, B60L 7/14, B60L 15/20, B62K 11/04

(54) **ELECTRIC DRIVING SYSTEM AND TRANSPORTATION EQUIPMENT INCLUDING THE SAME**
ELEKTRISCHES ANTRIEBSSYSTEM UND DAMIT AUSGESTATTETE TRANSPORTVORRICHTUNG
SYSTEME DE PROPULSION ELECTRIQUE ET ÉQUIPEMENT DE TRANSPORT LE COMPORTANT

(43) Date of publication of application: 08.02.2017
(73) Proprietor: Yamaha Motor Engineering Co., Ltd., Shizuoka 438-0026 (JP)
(72) Inventor: MATSUEDA, Hideki, Iwata-shi Shizuoka 438-0026 (JP); KOSHIMIZU, Mitsuru, Iwata-shi Shizuoka 438-0026 (JP); YAMAUCHI, Hirotoshi, Iwata-shi Shizuoka 438-0026 (JP); IYODA, Yuuto, Iwata-shi Shizuoka 438-0026 (JP); SHIMA, Yoshinori, Iwata-shi Shizuoka 438-0026 (JP)
(74) Representative: Zimmermann, Tankred Klaus
(86) International application number: PCT/JP2014/059878
(87) International publication number: WO 2015/151262

(56) References cited:
- EP-A1- 2 492 126
- EP-A1- 2 564 684
- EP-A1- 2 644 439
- EP-A2- 1 445 855
- GB-A- 2 483 375
- JP-A- H0 799 704
- JP-A- H0 799 704
- JP-A- H06 153 325
- JP-A- H06 153 325
- JP-A- 2003 134 602
- JP-A- 2003 259 505
- JP-A- 2010 029 051

## Description

### TECHNICAL FIELD

The present invention relates to an electric driving system and transportation equipment including the same, and more specifically to an electric driving system including a driving power source, and transporting equipment including the electric driving system.

### BACKGROUND ART

Patent Literature 1 discloses an example of conventional technique in this field. Patent Literature 1 discloses a two-wheel electric vehicle including an electric motor which drives a wheel directly; a battery which supplies electric power to the electric motor; and a resistor as an electric-power consumption means. In the two-wheel electric vehicle, the electric motor drives the wheel directly, and there is an attempt to prevent the battery from overcharge, by consuming regenerated electric power which is unavoidable in the direct drive design, with the resistor.

Patent Literature 2 discloses an electric vehicle with two propulsion motors. Under a regeneration command, the depth of discharge of a battery is detected, and the first and second motors are regeneratively operated when the battery can be charged. When the battery cannot be charged, either of the first motor or the second motor 10 is regeneratively operated, another motor of the first motor or the second motor is made to power-run by regenerative power acquired by the regenerative operation, and regenerative braking is applied without charging to the battery.

Patent Literature 3 discloses an electric vehicle with front and rear motors that provide mechanical drive and regenerative brake torque to a respective wheel. During regenerative braking, if the battery cannot receive all of the current produced by the rear motors, the controller controls the front motors to consume this current to generate mechanical drive power. To counteract this drive power the controller increases a braking torque generated by friction brakes located at the front of the vehicle so as to dissipate energy resulting from the drive power produced by the front motors. The friction brakes are arranged to provide addition braking torque if the torque demand cannot be handled by the regenerative braking torque capabilities of the electric motors.

### CITATION LIST

### PATENT LITERATURE

Patent Literature 1: JP-A 2013-17248
Patent Literature 2: JPH0799704 A
Patent Literature 3: GB2483375 A

### SUMMARY OF INVENTION

### TECHNICAL PROBLEM

There is a market demand for increased driving torque in electric vehicles.

A solution can be to use a motor which has an increased amount of magnets and/or increased number of windings and is capable of providing a greater output. However, increasing the amount of magnets or the number of windings increases the size of the motor. Also, the arrangement increases an induced voltage constant, and as a result, an induced voltage exceeds a battery voltage at a lower number of revolutions of the motor, i.e., unintended regeneration takes place more frequently. Attempts to avoid it by using a battery of a higher voltage and/or power consumption means of a greater capacity increase the size of the apparatus.

While it is undesirable in electric vehicles to increase the size of components such as the motor, it is unavoidable in the vehicle according to Patent Literature 1 to increase the size of the components such as the motor if increased driving torque is to be obtained.

Another solution to obtain increased driving torque is to increase motor current. In this case, the induced voltage constant does not increase as much but the motor and peripheral components must be increased in size as the current increases.

Therefore, a primary object of the present invention is to provide an electric driving system capable of supplying increased driving torque without increasing the size of the component while preventing overcharge of a driving power source, and to provide transportation equipment including the electric driving system.

### SOLUTION TO PROBLEM

According to an aspect of the present invention, there is provided an electric driving system which includes a driving power source; a first electric driving motor powered by the driving power source and including a first rotor; a second electric driving motor powered by the driving power source and including a second rotor; a first output shaft driven by the first electric driving motor; a second output shaft driven by the second electric driving motor; a first transmission section provided between the first rotor and the first output shaft; a second transmission section provided between the second rotor and the second output shaft; and a connecting section electrically connecting the first electric driving motor and the second electric driving motor with each other. With the above arrangement, the first transmission section is arranged to cause the first rotor and the first output shaft to move together in two directions, and the second transmission section is arranged not to transmit a driving force from the second output shaft to the second rotor, but to transmit a driving force from the second rotor to the second output shaft.

According to the present invention, the first electric driving motor supplies a driving force to the first output shaft, and on the other hand, can receive a reverse driving force from the first output shaft. Also, the second electric driving motor supplies a driving force to the second output shaft, and on the other hand, does not receive a reverse driving force from the second output shaft. Therefore, it is possible to obtain increased driving torque by driving the plurality of electric motors in power running. At times of regeneration, it is possible to perform regeneration and provide regenerative braking, and to charge the driving power source sufficiently with the first electric driving motor. Further, when the driving power source has a high voltage not lower than a predetermined voltage, it is possible to consume regenerated electric power from the first electric driving motor by means of the second electric driving motor via the connecting section, so it is possible to prevent the driving power source from overcharge. As described, the second electric driving motor serves both for power running and power consumption. Under power running, the second electric driving motor serves as torque supply means to help providing a large driving torque, and under regeneration, serves as power consumption means to consume excess electric power. Therefore, there is no necessity for separate power consumption means which is dedicated to consume a large amount of electric power, and to that extent it is possible to simplify the system and prevent the apparatus from being increased in size.

According to the invention, the electric driving system further includes a charge state detecting section which detects a charge state of the driving power source; and a control unit which causes the second electric driving motor to consume the regenerated electric power from the first electric driving motor when a detection result from the charge state detecting section satisfies a predetermined condition. In this case, it is possible, when a charge state of the driving power source satisfies the predetermined condition, to reliably consume the regenerated electric power from the first electric driving motor, with the second electric driving motor.

Preferably, the predetermined condition is a full-charge state. In this case, when a charge state of the driving power source is the full-charge state, it is possible to reliably consume the regenerated electric power from the first electric driving motor, with the second electric driving motor.

According to the invention, the electric driving system includes a regeneration detecting section which detects whether or not the first electric driving motor is in a regenerative operation. With the above, the control unit causes the second electric driving motor to consume the regenerated electric power from the first electric driving motor when a detection result from the regeneration detecting section indicates that regeneration is underway while there is no regeneration command issued for the first electric driving motor. In this case, even when unintended regeneration is underway, it is possible to protect the driving power source by consuming the regenerated electric power.

The term "unintended regeneration" herein refers to a phenomenon that an electric motor is rotated at such a number of evolutions that the electric motor generates an induced voltage exceeding a voltage of the driving power source, resulting in an inrush of the regenerated electric power into the driving power source regardless of a command from a control unit.

Preferably, the control unit supplies the second electric driving motor with a reactive current which does not cause the second electric driving motor to generate driving torque, i.e., d-axis current, when causing the second electric driving motor to consume the regenerated electric power from the first electric driving motor. In this case, it is possible to easily consume the regenerated electric power without stopping the second electric driving motor.

Further preferably, the control unit supplies the second electric driving motor with electricity so that the second rotor is locked in a predetermined position and the second electric driving motor does not rotate, when causing the second electric driving motor to consume the regenerated electric power from the first electric driving motor. By performing a lock-and-power operation as described, it is possible to easily consume the regenerated electric power without rotating the second electric driving motor.

Further, preferably, the control unit causes the second electric driving motor to rotate in reverse direction, when causing the second electric driving motor to consume the regenerated electric power from the first electric driving motor. In this case, it is possible to easily consume the regenerated electric power by simply reverse-rotating the second electric driving motor. As long as there is no influence on its output, the second transmission section may be allowed to rotate together with the second electric driving motor to increase an amount of consumption of the electric power.

Preferably, the second transmission section includes a clutch between the second rotor and the second output shaft. In this case, the arrangement makes it easy to constitute the second transmission section.

Further preferably, the first transmission section directly connects the first rotor and the first output shaft with each other. Connecting the first rotor and the first output shaft directly with each other simplifies a system configuration.

Further, preferably, the first electric driving motor has the same output as the second electric driving motor, or has a smaller output than the second electric driving motor. Normally, a torque required for regeneration is lower than a torque required for power running. Also, a required torque can be obtained by a plurality of electric motors (the first electric driving motor and the second electric driving motor), which means that there is a wide specification range for selection of each electric motor. Therefore, it is possible to use an electric motor for which a high torque is not required, as the first electric driving motor for the regeneration. In this case, by using a low-output motor which has a low induced voltage constant, it becomes less frequent for the electric motor to generate an induced voltage which exceeds the voltage of the driving power source, and this makes it less frequent for unintended regeneration to take place. Even if unintended regeneration takes place, the regenerated electric power is small enough that it is possible with the second electric driving motor to consume the regenerated electric power easily within its capacity. Also, the first electric driving motor provided by an electric motor for which a high torque is not required offers improved power generation efficiency (charging efficiency) at the time of regeneration.

Since there is a demand for increased driving torque in transportation equipment, the electric driving system described above is suitably applicable to transportation equipment.

The above-described object and other objects, characteristics, aspects and advantages of the present invention will become clearer from the following detailed description of embodiments of the present invention to be made with reference to the attached drawings.

### BRIEF DESCRIPTION OF DRAWINGS

Fig. 1 shows an electric two-wheel vehicle including an electric driving system according to an embodiment of the present invention; Fig. 1(a) is an illustrative side view, whereas Fig. 1(b) is an illustrative plan view.
Fig. 2 is a block diagram showing the electric driving system included in the embodiment in Fig. 1.
Fig. 3 is a flowchart showing an example of mode change operation of the electric driving system.
Fig. 4 is a flowchart showing an example of parallel operation mode process of the electric driving system.
Fig. 5 is a flowchart showing an example of single operation mode process of the electric driving system.
Fig. 6 is a flowchart showing an example of regeneration mode process of the electric driving system.
Fig. 7 is a flowchart showing an example of regeneration consumption mode process of the electric driving system.
Fig. 8 is a block diagram for describing the parallel operation mode process.
Fig. 9 is a block diagram for describing the single operation mode process.
Fig. 10 is a block diagram for describing the regeneration mode process.
Fig. 11 is a block diagram for describing the regeneration consumption mode process.
Fig. 12 shows an electric two-wheel vehicle including an electric driving system according to another embodiment of the present invention; Fig. 12(a) is an illustrative side view, whereas Fig. 12(b) is an illustrative plan view.
Fig. 13 is a block diagram showing the electric driving system included in the embodiment in Fig. 12.
Fig. 14 shows an electric two-wheel vehicle including an electric driving system according to still another embodiment of the present invention; Fig. 14(a) is an illustrative side view, whereas Fig. 14(b) is an illustrative plan view.
Fig. 15 is a block diagram showing the electric driving system included in the embodiment in Fig. 14.
Fig. 16 shows an electric two-wheel vehicle including an electric driving system according to still another embodiment of the present invention; Fig. 16(a) is an illustrative side view, whereas Fig. 16(b) is an illustrative plan view.
Fig. 17 is a block diagram showing the electric driving system included in the embodiment in Fig. 16.
Fig. 18 is a block diagram showing the electric driving system in another embodiment of the present invention.
Fig. 19 is an illustrative drawing of an electric four-wheel vehicle including an electric driving system according to still another embodiment of the present invention.
Fig. 20 is a block diagram showing the electric driving system included in the embodiment in Fig. 19.

### DESCRIPTION OF EMBODIMENTS

Hereinafter, embodiments of the present invention will be described with reference to the drawings.

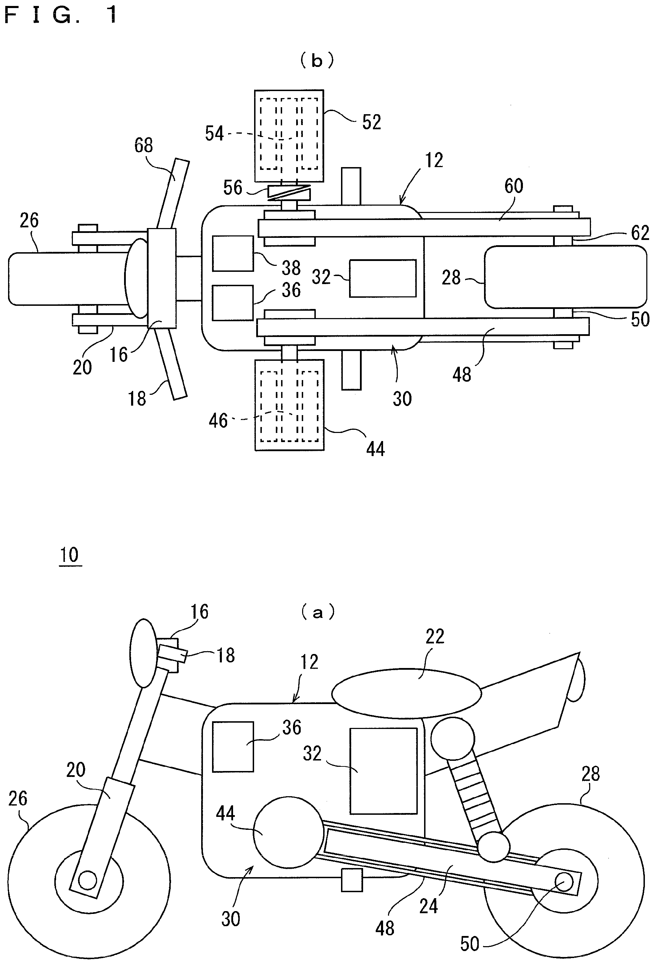

Fig. 1 shows an electric two-wheel vehicle 10 including an electric driving system 30 according to an embodiment of the present invention.

The electric two-wheel vehicle 10 includes a vehicle main body 12. The vehicle main body 12 includes an unillustrated steering shaft which is pivotably inserted through an unillustrated head pipe, a handle support 16 which is mounted on an upper end of the steering shaft, a handle 18 which is fixed to the handle support 16, a front fork 20 which is mounted on a lower end of the steering shaft via an unillustrated bracket, a seat 22, and a pivotable rear arm 24 which extends rearward. A front wheel 26 is rotatably mounted on a lower end portion of the front fork 20. A rear wheel 28 is rotatably mounted on a rear end portion of the rear arm 24.

The vehicle main body 12 as described above is mounted with an electric driving system 30.

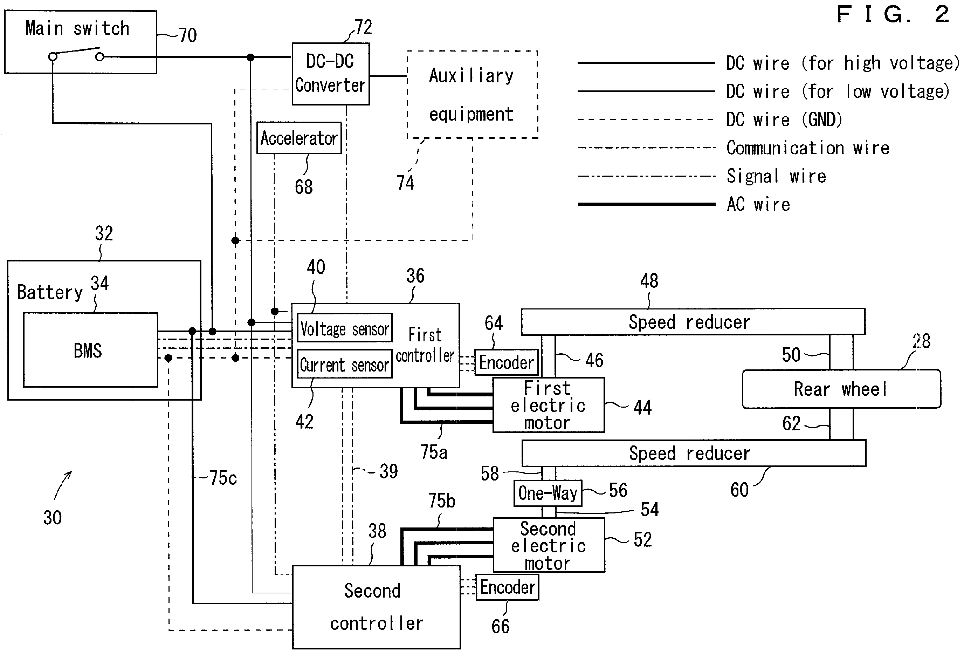

Referring to Fig. 2, the electric driving system 30 includes a battery 32 which serves as a direct-current driving power source. The battery 32 has a BMS (Battery Management System) 34 which manages the battery 32. The BMS 34 is connected to a first controller 36 and a second controller 38. Each of the first controller 36 and the second controller 38 includes, e.g., an MCU (Motor Control Unit) . The first controller 36 and the second controller 38 are communicably connected to each other via communication wires 39. Determination results and calculation results from the first controller 36 are sent to the second controller 38 via the communication wires 39 as necessary. Therefore, for example, determination results and calculation results from the first controller 36 are supplied to the second electric motor 52 (which will be described later) via the second controller 38. The first controller 36 has a voltage sensor 40 which detects a battery voltage, and a current sensor 42 which detects a battery current. The first controller 36 is connected to a first electric driving motor (hereinafter called "first electric motor") 44. The first electric motor 44 has a first rotor 46 which is connected to a first output shaft 50 via a speed reducer 48 including a chain for example. The second controller 38 is connected to a second electric driving motor (hereinafter called "second electric motor") 52. The second electric motor 52 has a second rotor 54 which is connected to a second output shaft 62 via a one-way clutch 56, an output shaft 58, and a speed reducer 60 including a chain for example. The first output shaft 50 and the second output shaft 62 are connected to an axle of the rear wheel 28. Therefore, torque from the first output shaft 50 and torque from the second output shaft 62 are combined in the axle of the rear wheel 28. Near the first electric motor 44, an encoder 64 is disposed. Based on detection signals from the encoder 64, the first controller 36 calculates the number of revolutions and a rotational direction of the first electric motor 44. Likewise, near the second electric motor 52, an encoder 66 is disposed. Based on detection signals from the encoder 66, the second controller 38 calculates the number of revolutions and a rotational direction of the second electric motor 52. The handle 18 is provided with an accelerator 68 (see in Fig. 1) which gives acceleration signals to the first controller 36 and the second controller 38. The battery 32 is connected to a DC-DC converter 72 and auxiliary equipment 74 via a main switch 70. Preferably, the first electric motor 44 has the same output as the second electric motor 52, or a lower output than the second electric motor 52. Further, preferably, the first electric motor 44 is provided by a motor which has output specifications suitable to an amount of electric power used as regeneration, whereas the second electric motor 52 is provided by a motor of a high output type. Preferably, the battery 32 is provided by a large-capacity battery. The first electric motor 44 and the second electric motor 52 produce desirable low-speed torque, so the speed reducers 48 and 60 may have a small reduction ratio. This enables high speed running.

In the electric driving system 30 described above, when the main switch 70 is turned ON, the first controller 36 and the second controller 38 are started. On the other hand, when the main switch 70 is tuned OFF, the first controller 36 and the second controller 38 are stopped, and the electric driving system 30 of the electric two-wheel vehicle 10 is shut down. As described, an ON/OFF operation on the main switch 70 issues start/stop commands of the first controller 36 and the second controller 38. The accelerator 68 sends a start command of the electric two-wheel vehicle 10. An acceleration signal according to an amount of operation of the accelerator 68 is supplied from the accelerator 68 to the first controller 36 and the second controller 38. The first controller 36 is supplied with electric power from the battery 32 via the BMS 34, whereby the first controller 36 controls the first electric motor 44. The second controller 38 is supplied with electric power from the battery 32 via the BMS 34, whereby the second controller 38 controls the second electric motor 52. In other words, the first electric motor 44 and the second electric motor 52 are powered by the battery 32 via the first controller 36 and the second controller 38 respectively. The first output shaft 50 is driven by the first electric motor 44 via the speed reducer 48. The second output shaft 62 is driven by the second electric motor 52 via the one-way clutch 56 and the speed reducer 60.

In the present embodiment, the speed reducer 48 represents the first transmission section which is arranged to cause the first rotor 46 and the first output shaft 50 to move together in two directions. The one-way clutch 56, the output shaft 58, and the speed reducer 60 represent the second transmission section. Since the second transmission section includes the one-way clutch 56, a driving force from the second output shaft 62 is not transmitted to the second rotor 54, but a driving force from the second rotor 54 is transmitted to the second output shaft 62. The connecting section, which electrically connects the first electric motor 44 and the second electric motor 52 with each other, includes the first controller 36, the second controller 38, AC wires 75a connecting the first controller 36 and first electric motor 44 with each other, AC wires 75b connecting the second controller 38 and the second electric motor 52 with each other, and DC wire 75c connecting the first controller 36 and the second controller 38 with each other. The charge state detecting section detects a charge state of the battery 32, and includes the BMS 34 and the voltage sensor 40. The regeneration detecting section detects whether or not the first electric motor 44 is regenerating, and includes the BMS 34 and the current sensor 42. The control unit includes the first controller 36 and the second controller 38.

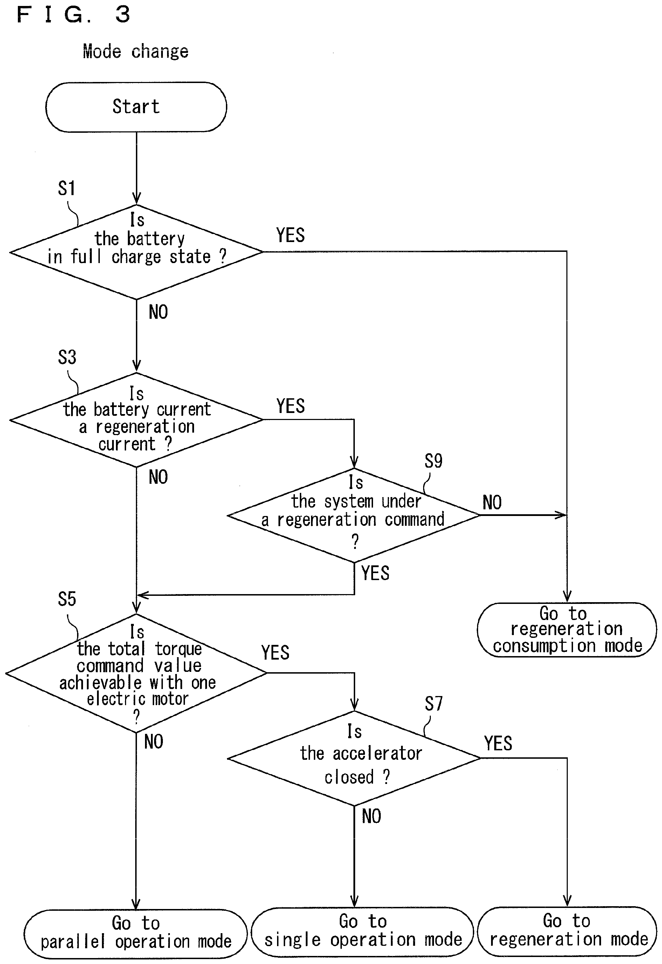

Next, referring to Fig. 3 through Fig. 7, an operation of the electric driving system 30 will be described.

Referring to Fig. 3, mode change operation of the electric driving system 30 will be described.

First, the first controller 36 determines whether or not the battery 32 is in a full-charge state (Step S1). This is determined based on a detection signal from the voltage sensor 40 in the first controller 36 and communication data from the BMS 34. If the battery 32 is not in the full-charge state, the first controller 36 determines whether or not a battery current is a regeneration current (whether or not the current is flowing from the first controller 36 to the battery 32 and charging the battery 32) (Step S3). This is determined based on a detection signal from the current sensor 42 in the first controller 36 and communication data from the BMS 34. If the battery current is not a regeneration current, the first controller 36 determines whether or not a total torque command value can be handled by one electric motor (Step S5) . In other words, a determination is made on whether or not a torque indicated by the total torque command value is obtainable from one electric motor. The total torque command value is determined by the first controller 36 based on an acceleration signal from the accelerator 68 and a detection signal from the encoder 64. If the total torque command value is not achievable with one electric motor, the process goes to a parallel operation mode. On the other hand, if Step S5 finds that the total torque command value is achievable with one electric motor, the first controller 36 determines whether or not the accelerator 68 is closed (Step S7). If the accelerator 68 is not closed, the process goes to a single operation mode. On the other hand, if the accelerator 68 is closed, the process goes to a regeneration mode.

If Step S3 finds that the battery current is a regeneration current, the first controller 36 determines whether or not the system is under a regeneration command (Step S9). The first controller 36 determines whether or not the system is under the regeneration command based on a detection signal from the encoder 64 and an acceleration signal from the accelerator 68. If the detection signal from the encoder 64 indicates that a speed of the electric two-wheel vehicle 10 is not higher than a predetermined value and the acceleration signal from the accelerator 68 indicates that the accelerator 68 is closed, it is determined that the system is under the regeneration command. Otherwise, it is determined that the system is under an unintended regeneration. If the system is under the regeneration command, the process goes to Step S5. On the other hand, if the system is not under the regeneration command (i.e., if unintended regeneration is underway), the process goes to a regeneration consumption mode. If Step S1 finds that the battery 32 is in the full-charge state, the process goes to the regeneration consumption mode.

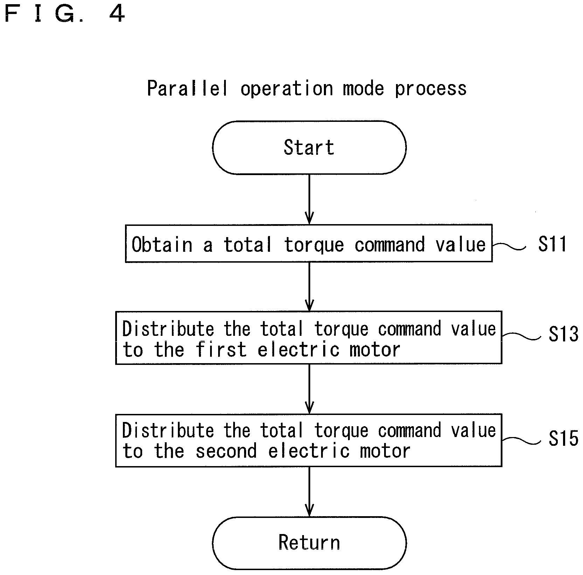

Referring to Fig. 4, a parallel operation mode process of the electric driving system 30 will be described.

First, the first controller 36 obtains a total torque command value (Step S11). The total torque command value is determined by the first controller 36 based on a signal from the accelerator 68 and a detection signal from the encoder 64. Then, the first controller 36 distributes the total torque command value to the first electric motor 44 (Step S13), and the second controller 38 distributes the total torque command value to the second electric motor 52 (Step S15), and then the process returns. An allocation ratio of the total torque command value to the first electric motor 44 and the second electric motor 52 may be set according to specifications of the first electric motor 44 and the second electric motor 52, or may be set to half and half. Another arrangement may be that a portion of the total torque command value is prioritized to the first electric motor 44 while the rest of the total torque command value is allocated to the second electric motor 52. For example, there may be an arrangement that the first electric motor 44 is given a portion of the total torque command value to a limit of the first electric motor 44, and the rest of the total torque command value which cannot be taken by the first electric motor 44 is allocated to the second electric motor 52.

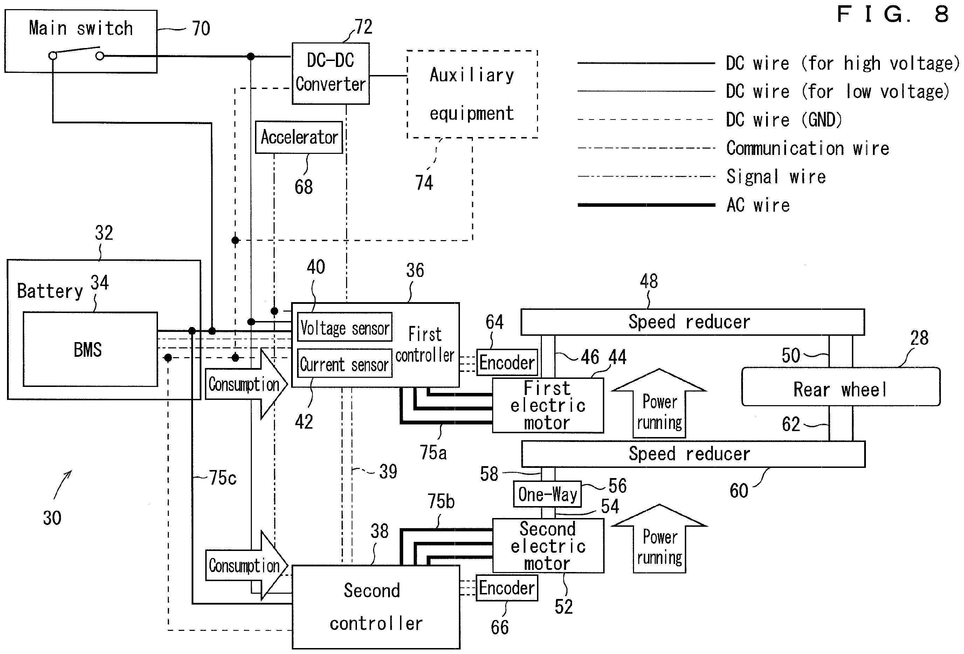

Referring to Fig. 8, by executing the parallel operation mode process, it is possible to combine a torque from the first electric motor 44 and a torque from the second electric motor 52, to obtain a high torque. As a result, a starting driving force and a maximum speed are improved.

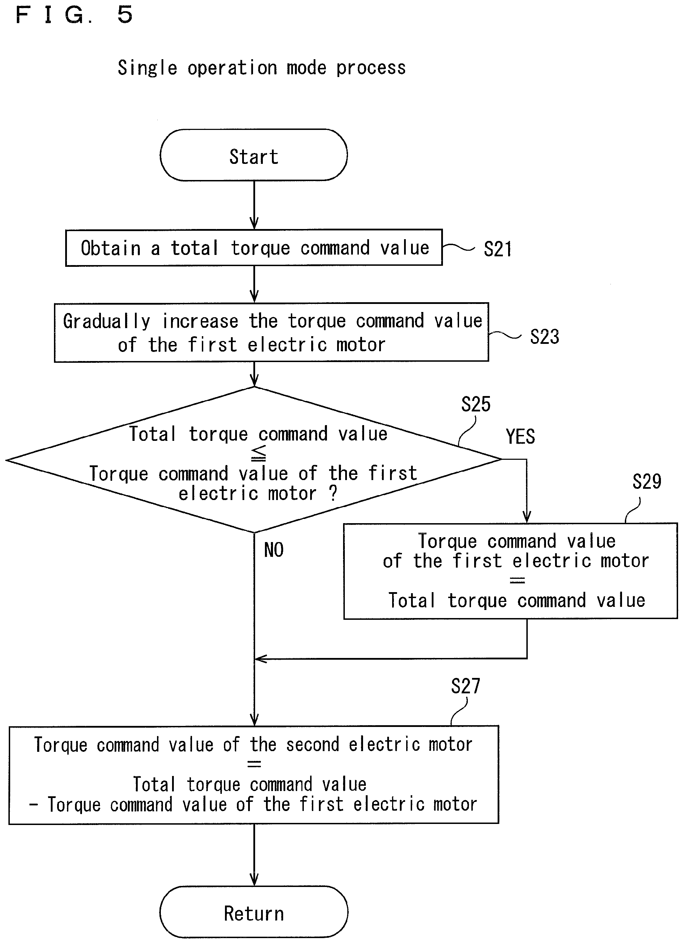

Referring to Fig. 5, a single operation mode process of the electric driving system 30 will be described.

First, the first controller 36 obtains a total torque command value (Step S21). The total torque command value is determined by the first controller 36 based on a signal from the accelerator 68 and a detection signal from the encoder 64. Then, the first controller 36 gradually increases a torque command value of the first electric motor 44 (Step S23), and the first controller 36 determines whether or not the torque command value of the first electric motor 44 is not smaller than the total torque command value (Step S25). In other words, a determination is made as to whether or not the torque command value of the first electric motor 44 has reached the total torque command value. If the torque command value of the first electric motor 44 is smaller than the total torque command value, the first controller 36 sets a torque command value of the second electric motor 52 to a value obtained by subtracting the torque command value of the first electric motor 44 from the total torque command value (Step S27), and then the process returns. On the other hand, if Step S25 finds that the torque command value of the first electric motor 44 is not smaller than the total torque command value, the first controller 36 sets the torque command value of the first electric motor 44 to the total torque command value (Step S29), and then the process goes to Step S27. In Step S27, the first controller 36 sets the torque command value of the second electric motor 52 to zero, and the second controller 38 stops the second electric motor 52, and electric discharge from the battery 32 to the second controller 38 via the BMS 34 is also stopped. As described, when a required torque is not greater than a predetermined value, the single operation mode is executed.

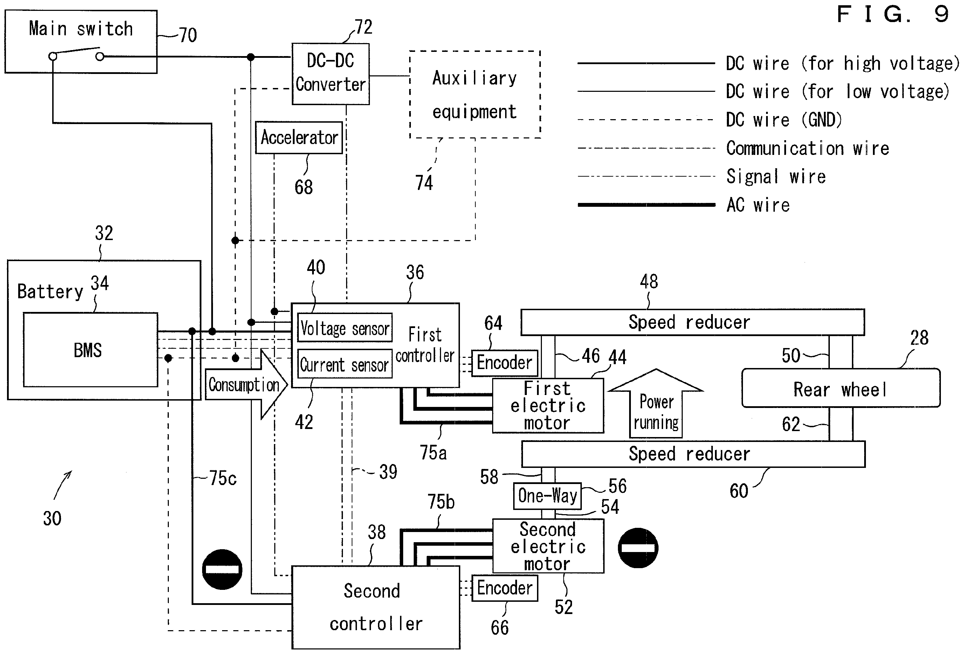

Referring to Fig. 9, when the single operation mode is executed, it is possible to perform power running only with the first electric motor 44. In addition, the one-way clutch 56 does not transmit a driving force from the second output shaft 62 to the second electric motor 52, so there is zero loss from the second electric motor 52, such as iron loss, copper loss and mechanical loss. Therefore, it is possible to improve fuel efficiency and increase cruising distance.

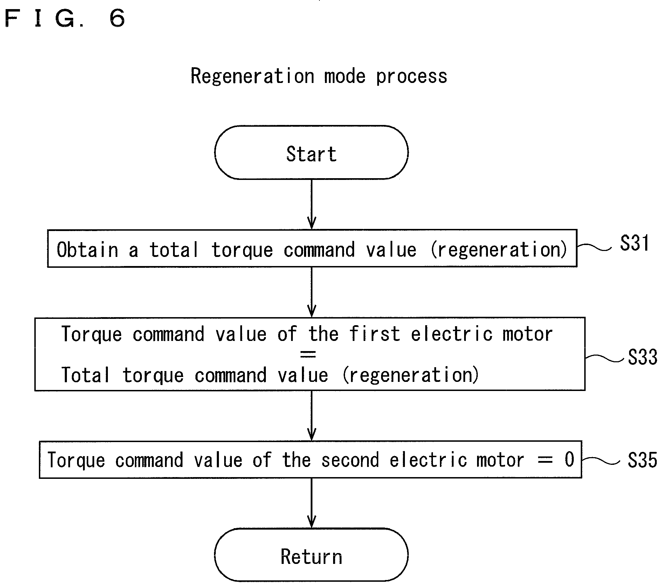

Referring to Fig. 6, a regeneration mode process of the electric driving system 30 will be described.

First, the first controller 36 obtains a regenerative total torque command value (Step S31). The regenerative total torque command value is determined by the first controller 36 based on a detection signal from the encoder 64. Then, the first controller 36 sets a torque command value of the first electric motor 44 to the regenerative total torque command value (Step S33), and the first controller 36 sets the torque command value of the second electric motor 52 to zero (Step S35), and then the process returns. As described, only the first electric motor 44 performs electric power generation to apply regenerative braking, whereas the second electric motor 52 is stopped, and electric discharge from the battery 32 to the second controller 38 via the BMS 34 is also stopped. It should be noted here that a regenerative torque in the regeneration mode process shown in Fig. 6 works in a reverse direction from a direction of the driving torque in the parallel operation mode process shown in Fig. 4 and the driving torque in the single operation mode process shown in Fig. 5.

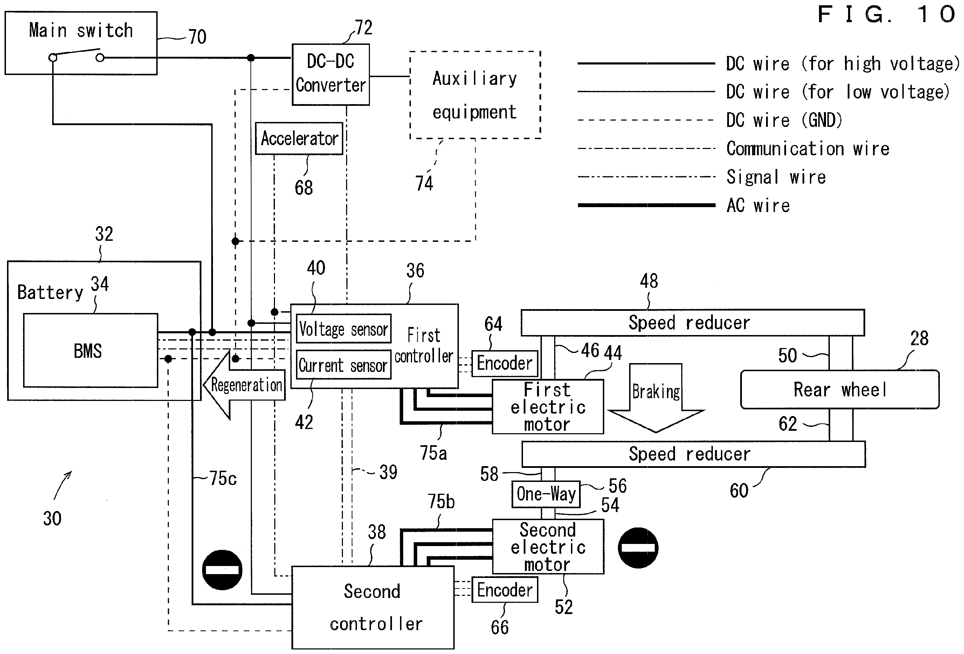

Referring to Fig. 10, when the electric two-wheel vehicle 10 has a speed which is not higher than a predetermined value and the accelerator 68 is turned OFF, execution of the regeneration mode provides an appropriate engine brake feeling from a regeneration function, leading to improved feeling. Also, since it is possible to charge the battery 32 and restore electric power by way of regeneration, cruising distance is improved. Further, since the one-way clutch 56 does not transmit a driving force from the second output shaft 62 to the second electric motor 52, there is zero loss from the second electric motor 52, such as iron loss, copper loss and mechanical loss.

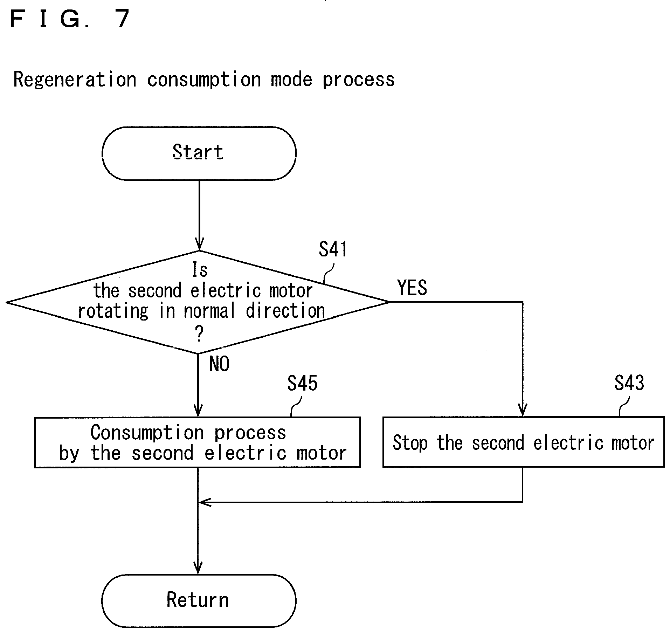

Referring to Fig. 7, a regeneration consumption mode process of the electric driving system 30 will be described.

First, the second controller 38 determines whether or not the second electric motor 52 is rotating in a normal direction, based on a detection signal from the encoder 66 (Step S41). If the second electric motor 52 is rotating in the normal direction, the second electric motor 52 is stopped (Step S43), whereas if the second electric motor 52 is not rotating in the normal direction, the second electric motor 52 is caused to perform a consumption process (Step S45), and then the process returns. In the electric-power consumption process by the second electric motor 52 in Step S45, the second controller 38 causes the second electric motor 52 to rotate in reverse direction for example. Another arrangement may be that the second controller 38 locks and powers the second electric motor 52. In other words, there may be an arrangement that electric power is applied to the second electric motor 52 so that the second rotor 54 is locked in a predetermined position and the second electric motor 52 does not operate. In this arrangement, the second electric motor 52 is supplied with non-sinusoidal electric current for example. Further, still another arrangement may be that electric power is applied to the second electric motor 52 to oscillate the second rotor 54.

Another arrangement in the regeneration consumption mode process of the electric driving system 30 may be that a reactive current (d-axis current) is applied to the second electric motor 52 for power consumption without generating driving torque, regardless of whether or not the second electric motor 52 is rotating in the normal direction (without determining whether or not the motor is rotating in the normal direction) . In other words, a so-called weak field current which is weak enough not to drive the second electric motor 52 may be applied. Further, in the regeneration consumption mode process of the electric driving system 30, power consumption may be made only by copper loss, regardless of whether or not the second electric motor 52 is rotating in the normal direction (without determining whether or not the motor is rotating in the normal direction). In these cases, it is possible to easily consume the regenerated electric power without stopping the second electric motor 52.

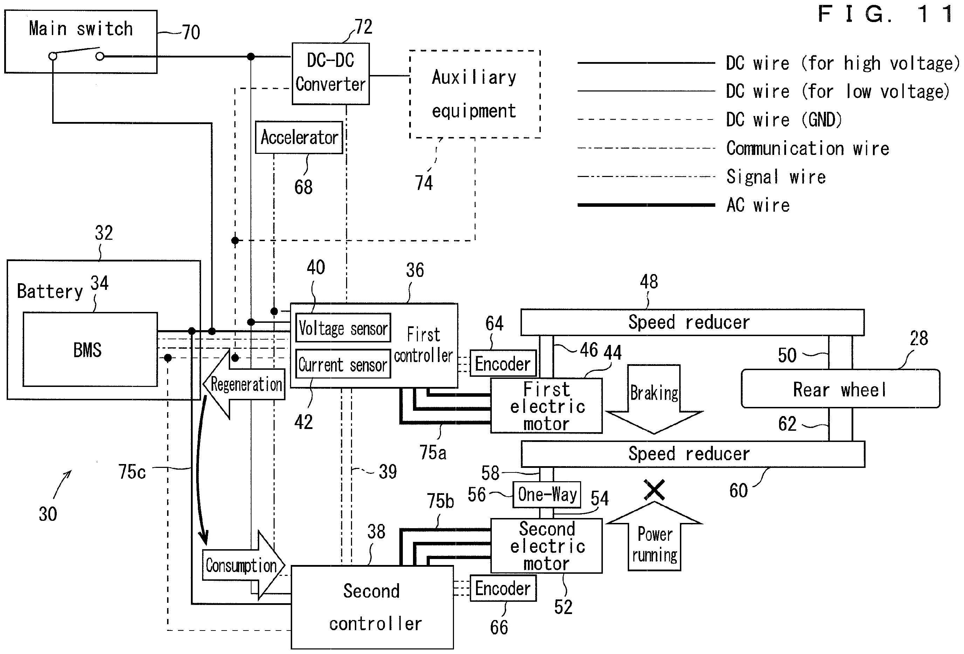

Referring to Fig. 11, by executing the regeneration consumption mode, it is possible that electric power (regenerated electric power) generated by the first electric motor 44 is consumed by the second electric motor 52, whereby it is possible to protect the battery 32. In other words, when the battery 32 is in the full-charge state, or when unintended regeneration is underway on a down-slope traveling etc., the second electric motor 52 is rotated in reverse direction, or the second electric motor 52 is locked and powered, whereby the electric power is consumed without charging the battery 32. It should be noted here that operations of the second electric motor 52 resulting from the reverse rotation and the lock-and-power, are not transmitted by the one-way clutch 56 to the speed reducer 60, so there is no negative influence on the rear wheel 28 or on the electric two-wheel vehicle 10. Also, even in the full-charge state, it is possible to provide a normal engine brake feeling.

It should be noted here that there may be provided a circuit which is capable of starting the first controller 36 with an induced voltage even when the main switch 70 is tuned OFF. In this case, it is possible to start the second controller 38 by communication from the first controller 36 to the second controller 38 via the communication wires 39 once the first controller 36 is started.

According to the electric two-wheel vehicle 10 described above, the first electric motor 44 supplies a driving force to the first output shaft 50, and on the other hand, can receive a reverse driving force from the first output shaft 50. Also, the second electric motor 52 supplies a driving force to the second output shaft 62, and on the other hand, does not receive a reverse driving force from the second output shaft 62. Therefore, it is possible to obtain increased driving torque by driving the first electric motor 44 and the second electric motor 52, in power running, whereas at times of regeneration, it is possible to perform regeneration and provide regenerative braking, and to charge the battery 32 sufficiently with the first electric motor 44. Further, when the battery 32 has a high voltage not lower than a predetermined voltage (typically in full-charge state), it is possible to reliably consume regenerated electric power from the first electric motor 44 by means of the second electric motor 52 via the connecting section, i.e., via the AC wires 75a, the first controller 36, the DC wire 75c, the second controller 38 and the AC wires 75b; and therefore to prevent the battery 32 from overcharge. As described above, the second electric motor 52 serves both for power running and power consumption. Under power running, the second electric motor 52 serves as torque supply means to help providing a large driving torque, and under regeneration, serves as power consumption means to consume excess electric power. Therefore, there is no necessity for separate power consumption means which is dedicated to consume a large amount of electric power, and to that extent it is possible to simplify the system and prevent the apparatus from being increased in size.

It should be noted here that while there is a market demand for increased driving torque, a regenerative braking force may be smaller than the driving torque. Also, in an actual use, there are times of coasting, which does not require any driving force or braking force. Therefore, even with an arrangement that only one electric motor provides regenerative braking, the rider does not feel that regenerative braking force is insufficient in actual riding.

When a charge state of the battery 32 satisfies predetermined conditions, it is possible, with the second electric motor 52, to reliably consume the regenerated electric power from the first electric motor 44. Especially, when the battery 32 is in a full-charge state, it is possible with the second electric motor 52 to reliably consume the regenerated electric power from the first electric motor 44.

Also, when a detection result of the current sensor 42 indicates that regeneration is underway while there is no regeneration command issued for the first electric motor 44, the second controller 38 causes the second electric motor 52 to consume the regenerated electric power from the first electric motor 44. Therefore, even when unintended regeneration is underway, it is possible to protect the battery 32 by consuming the regenerated electric power.

When regenerated electric power from the first electric motor 44 is consumed by the second electric motor 52 using the arrangement that the second controller 38 locks and powers the second electric motor 52, the regenerated electric power is easily consumed without rotating the second electric motor 52.

When regenerated electric power from the first electric motor 44 is consumed by the second electric motor 52 using the arrangement that the second controller 38 causes the second electric motor 52 to rotate in reverse direction, the regenerated electric power is easily consumed. As long as there is no influence on its output, the second transmission section may be allowed to rotate together with the second electric motor 52 to increase an amount of consumption of the electric power.

The second transmission section can be constituted easily by including the clutch 56 between the second rotor 54 and the second output shaft 62.

The first electric motor 44 on the regeneration side is provided by an electric motor for which a high torque is not required, i.e., a low output motor having a low induced voltage constant. This makes it less frequent that the first electric motor 44 generates an induced voltage which exceeds the voltage of the battery 32, and this makes it less frequent for unintended regeneration to take place. Even if unintended regeneration takes place, the regenerated electric power is small enough that it is possible with the second electric motor 52 to consume the regenerated electric power easily within its capacity. Also, the first electric motor 44 provided by an electric motor for which a high torque is not required offers improved power generation efficiency (charging efficiency) at times of regeneration.

Since there is a demand for increased driving torque in the electric two-wheel vehicle 10, the electric driving system 30 is preferably applicable to the electric two-wheel vehicle 10.

It should be noted here that in Step S1 in Fig. 3, a determination was made on whether or not the battery 32 is in a full-charge state. However, the present invention is not limited to this. A determination may be made on whether or not a battery voltage is an overvoltage. The term overvoltage refers to a high voltage at or above which it is determined that there is an abnormal situation (high voltage abnormality) . A condition of the battery 32 is monitored by the BMS 34, but even if there is no communication data inputted from the BMS 34, the first controller 36 can determine whether or not the battery voltage is an overvoltage based on a detection signal from the voltage sensor 40. When the battery voltage is an overvoltage in this arrangement, it is possible, with the second electric motor 52, to reliably consume the regenerated electric power from the first electric motor 44.

Also in Step S1 in Fig. 3, a determination may be made on whether or not the battery 32 is in a low temperature state. Further, a determination may be on whether or not the battery 32 is in a high temperature state. In these arrangements, it is possible with the second electric motor 52 to reliably consume the regenerated electric power from the first electric motor 44 when the battery 32 is in the low temperature state or when the battery 32 is in the high temperature state.

As described, the predetermined conditions regarding the charge state of the battery 32 include not only a case where the battery 32 is in a full-charge state, but also a case where the battery voltage is an overvoltage, a case where the battery 32 is in a low temperature state, a case where the battery 32 is in a high temperature state, etc.

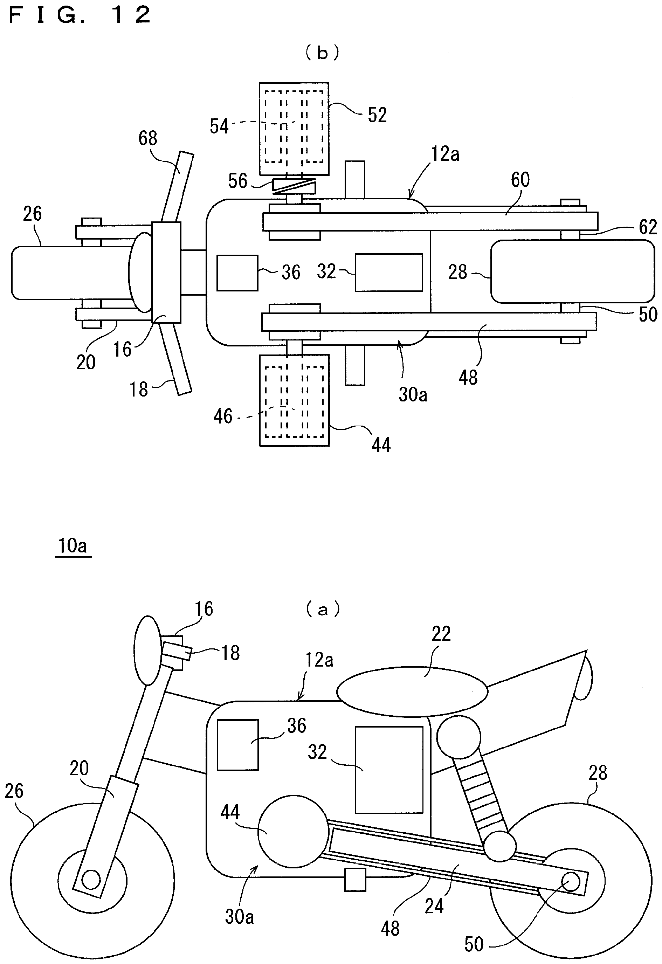

Next, Fig. 12 shows an electric two-wheel vehicle 10a as another embodiment of the present invention.

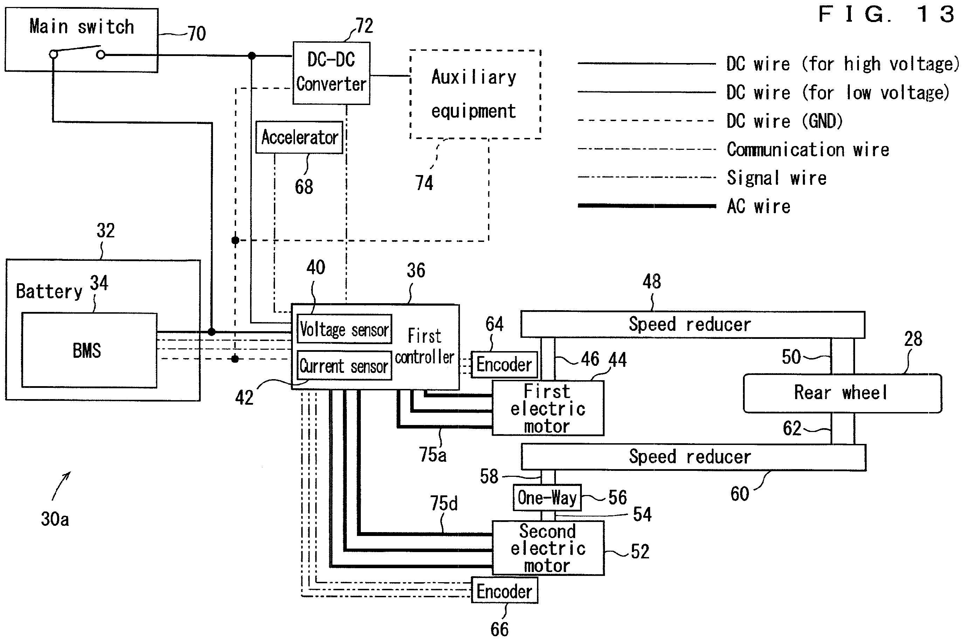

The electric two-wheel vehicle 10a includes a vehicle main body 12a, and the vehicle main body 12a is mounted with an electric driving system 30a. Referring to Fig. 13, unlike the electric driving system 30 of the electric two-wheel vehicle 10, the electric driving system 30a does not include the second controller 38, the AC wires 75b, the DC wire 75c and the communication wires 39, but includes AC wires 75d which connect the first controller 36 and the second electric motor 52 with each other. Therefore, the first controller 36 also serves as the second controller 38 and controls the second electric motor 52. The connecting section, which electrically connects the first electric motor 44 and the second electric motor 52, includes the first controller 36 and the AC wires 75a, 75d. The first controller 36 represents the control unit. Other arrangements of the electric two-wheel vehicle 10a are the same as those of the electric two-wheel vehicle 10, so description therefor will not be repeated.

The electric two-wheel vehicle 10a offers substantially the same advantages as offered by the electric two-wheel vehicle 10.

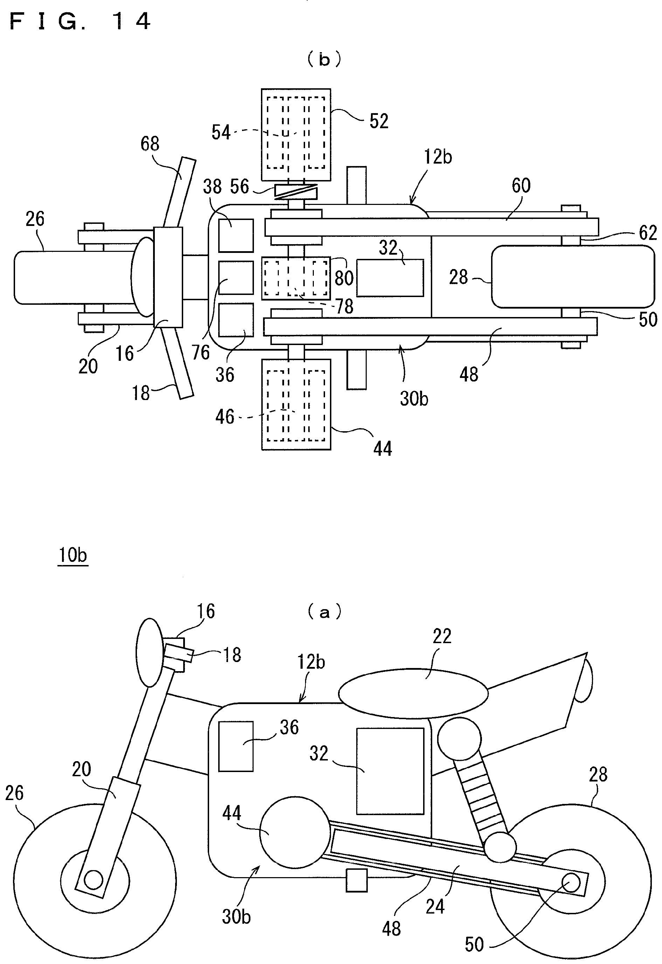

Next, Fig. 14 shows an electric two-wheel vehicle 10b as another embodiment of the present invention.

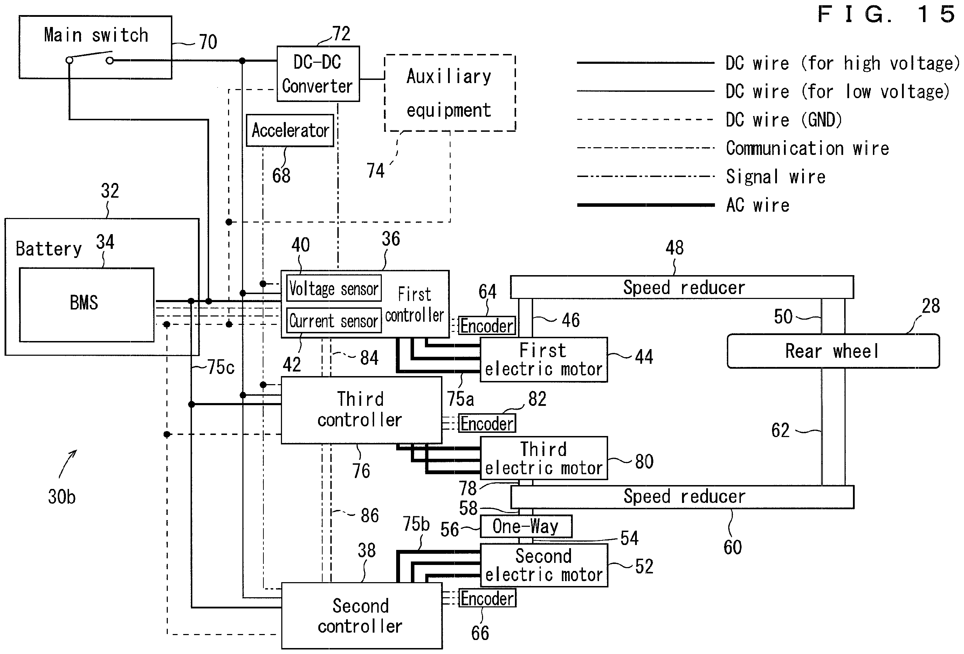

The electric two-wheel vehicle 10b includes a vehicle main body 12b, and the vehicle main body 12b is mounted with an electric driving system 30b. Referring to Fig. 15, the electric driving system 30b includes, in addition to the arrangements in the electric driving system 30 of the electric two-wheel vehicle 10, a third controller 76 which includes an MCU for example; a third electric driving motor (hereinafter called "third electric motor") 80 which includes a third rotor 78; and an encoder 82. The third rotor 78 of the third electric motor 80 is connected to the output shaft 58. Further, instead of the communication wires 39, the electric driving system 30b includes communication wires 84, 86. The first controller 36 and the third controller 76 are communicably connected by the communication wires 84, whereas the second controller 38 and the third controller 76 are communicably connected by the communication wires 86. The third controller 76 is supplied with electric power from the battery 32 via the BMS 34, whereby the third controller 76 controls the third electric motor 80. In other words, the third electric motor 80 is powered by the battery 32 via the third controller 76. The control unit includes the first controller 36, the second controller 38 and the third controller 76. Other arrangements of the electric two-wheel vehicle 10b are the same as those of the electric two-wheel vehicle 10, so description therefor will not be repeated.

The electric two-wheel vehicle 10b offers substantially the same advantages as offered by the electric two-wheel vehicle 10.

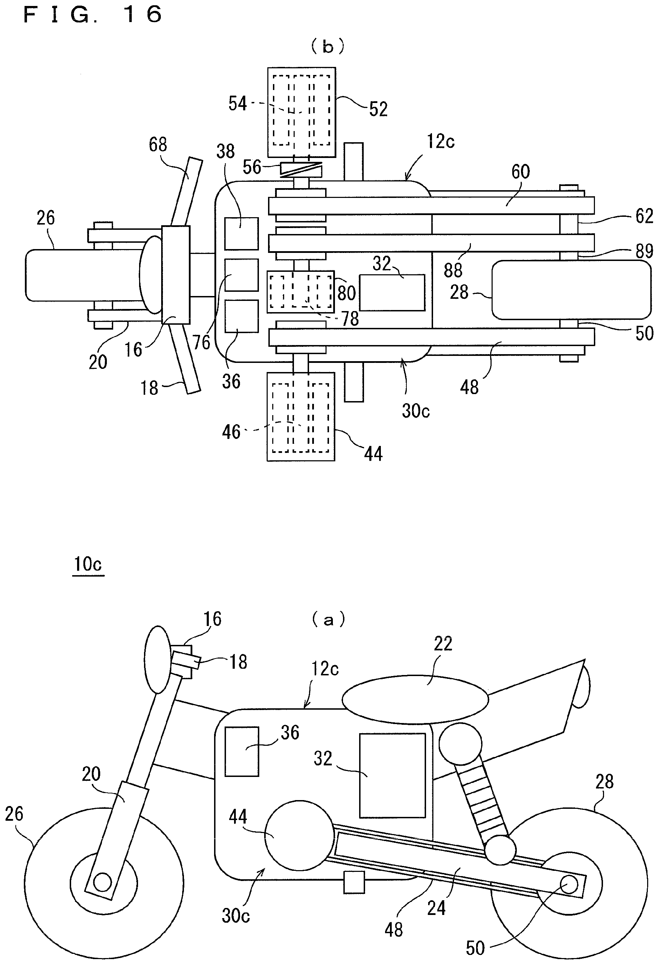

Further, Fig. 16 shows an electric two-wheel vehicle 10c as another embodiment of the present invention.

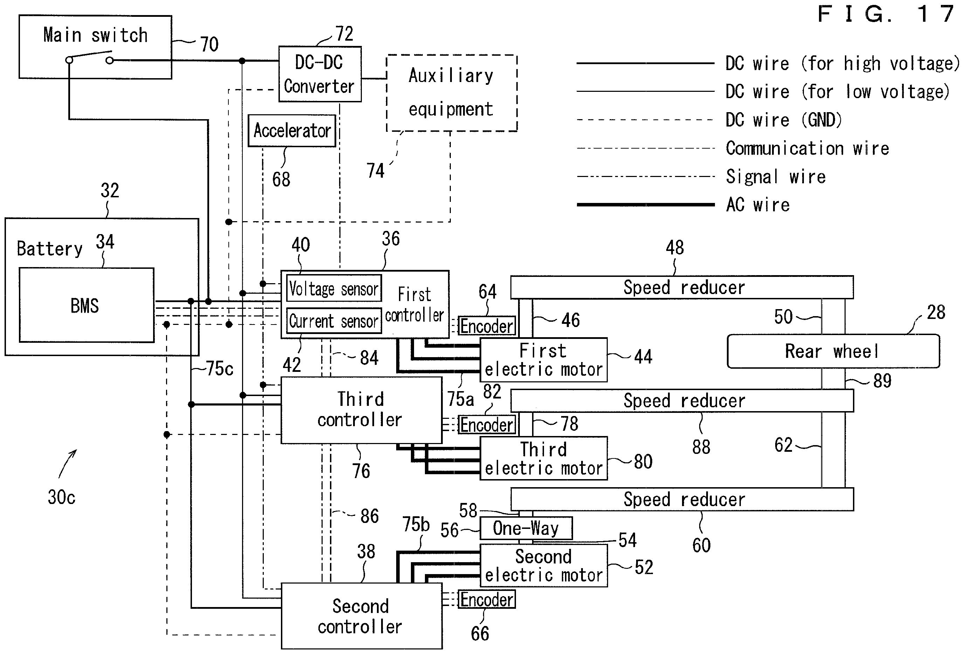

The electric two-wheel vehicle 10c includes a vehicle main body 12c, and the vehicle main body 12c is mounted with an electric driving system 30c. Referring to Fig. 17, in addition to the arrangements of the electric driving system 30b of the electric two-wheel vehicle 10b, the electric driving system 30c includes a speed reducer 88 which includes a chain for example, and a third output shaft 89. The third rotor 78 of the third electric motor 80 is not connected to the output shaft 58, but connected to the third output shaft 89 via the speed reducer 88. The third output shaft 89 connects an axle of the rear wheel 28 and the second output shaft 62 with each other. The speed reducer 88 represents the third transmission section. Other arrangements of the electric two-wheel vehicle 10c are the same as those of the electric two-wheel vehicle 10b, so description therefor will not be repeated.

The electric two-wheel vehicle 10c offers substantially the same advantages as offered by the electric two-wheel vehicle 10.

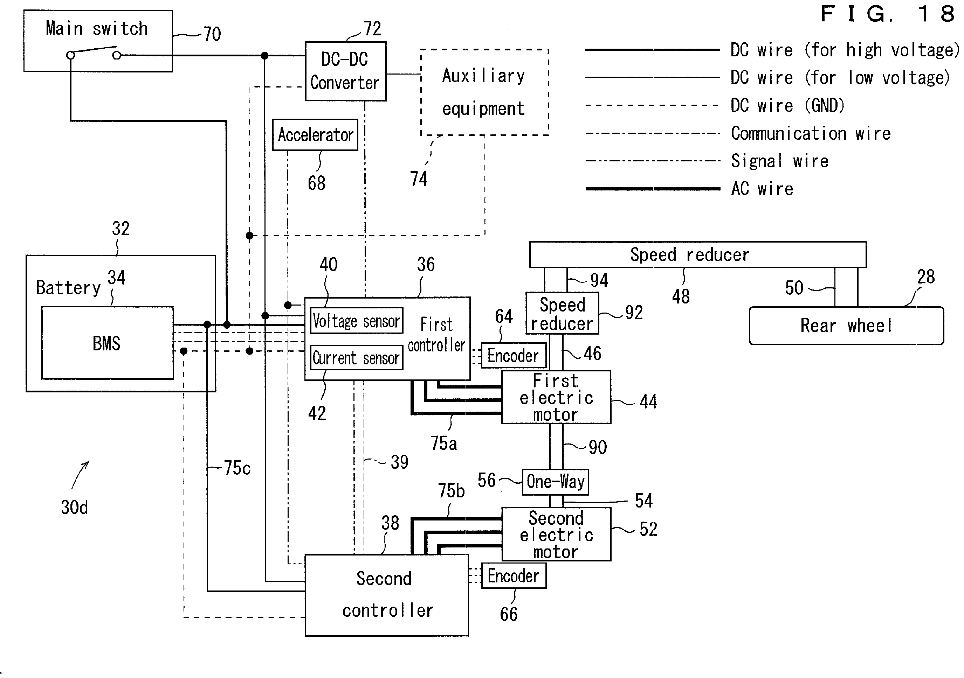

Next, Fig. 18 shows an electric driving system 30d as another embodiment of the present invention.

The electric driving system 30d does not include the output shaft 58, the speed reducer 60 and the second output shaft 62 in the electric driving system 30 of the electric two-wheel vehicle 10, but includes a second output shaft 90 which is directly connected to the first rotor 46 of the first electric motor 44. The second rotor 54 of the second electric motor 52 is connected to the first rotor 46 of the first electric motor 44 via the one-way clutch 56 and the second output shaft 90, whereby torque from the second output shaft 90 is supplied to the first rotor 46 of the first electric motor 44. Also, in the electric driving system 30d, a speed reducer 92 and an output shaft 94 are provided between the first rotor 46 and the speed reducer 48. The speed reducers 48, 92, and the output shaft 94 represent the first transmission section. The one-way clutch 56 represents the second transmission section. Other arrangements in the electric driving system 30d are the same as those in the electric driving system 30, so description therefor will not be repeated.

An electric two-wheel vehicle 10 which makes use of the electric driving system 30d offers substantially the same advantages as those offered by the electric two-wheel vehicle 10 which makes use of the electric driving system 30. It should be noted here that in the electric driving system 30d, the first electric motor 44 and the second electric motor 52 rotate in the same direction.

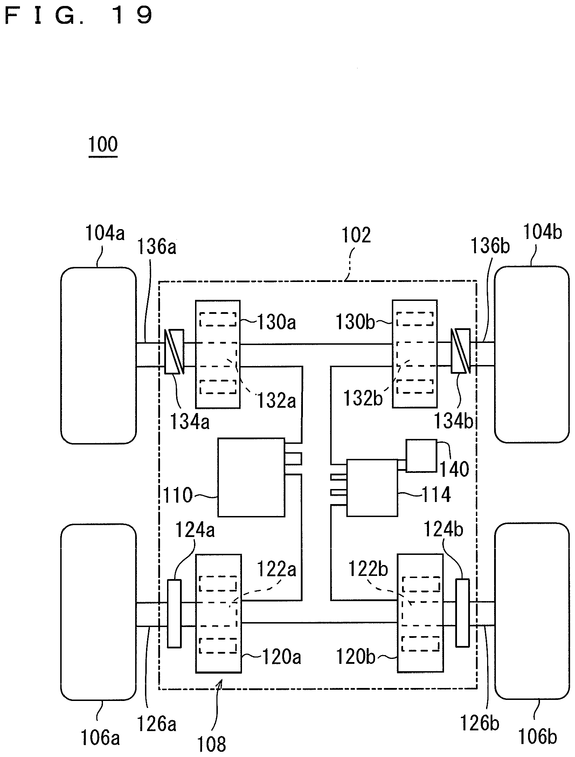

Further, Fig. 19 shows an electric four-wheel vehicle 100 as an embodiment of the present invention.

The electric four-wheel vehicle 100 includes a vehicle main body 102. The vehicle main body 102 has a front portion which rotatably supports a pair of front wheels 104a, 104b. The vehicle main body 102 has a rear portion which rotatably supports a pair of rear wheels 106a, 106b.

The vehicle main body 102 as described above is mounted with an electric driving system 108.

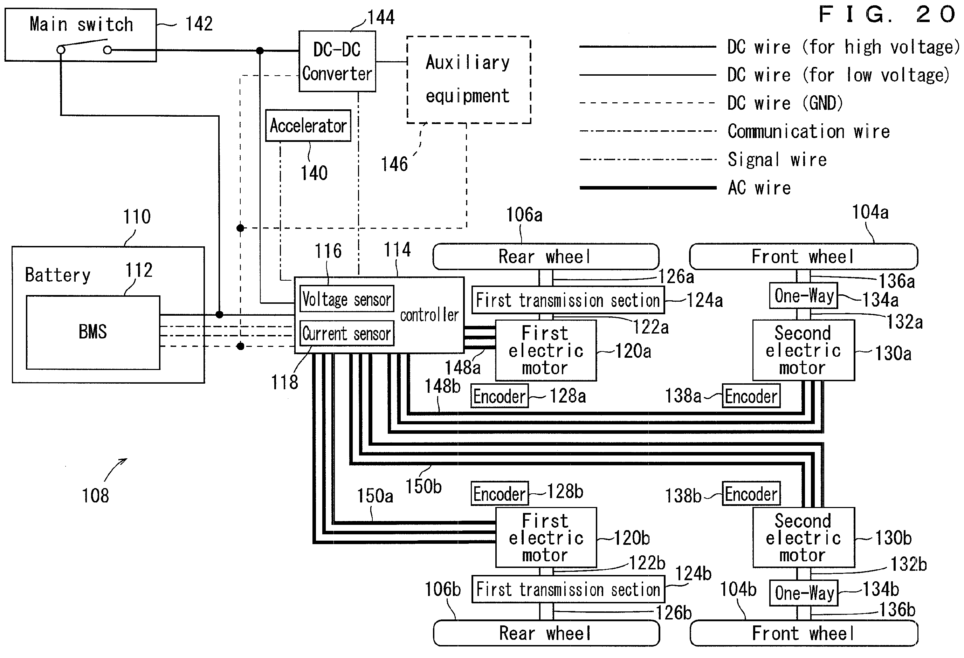

Referring to Fig. 20, the electric driving system 108 includes a battery 110 which serves as a direct-current driving power source. The battery 110 has a BMS 112 which manages the battery 110. The BMS 112 is connected to a controller 114. The controller 114 includes an MCU for example. The controller 114 includes a voltage sensor 116 which detects a battery voltage, and a current sensor 118 which detects a battery current.

The controller 114 is connected to a pair of first electric motors 120a, 120b. The first electric motor 120a has a first rotor 122a which is connected to a first output shaft 126a via a first transmission section 124a. The first transmission section 124a includes a coupling for example. The first output shaft 126a is connected to an axle of the rear wheel 106a. An encoder 128a is disposed near the first electric motor 120a. Based on detection signals from the encoder 128a, the controller 114 calculates the number of revolutions and a rotational direction of the first electric motor 120a. Likewise, the first electric motor 120b has a first rotor 122b which is connected to a first output shaft 126b via a first transmission section 124b. The first transmission section 124b includes a coupling for example. The first output shaft 126b is connected to an axle of the rear wheel 106b. An encoder 128b is disposed near the first electric motor 120b. Based on detection signals from the encoder 128b, the controller 114 calculates the number of revolutions and a rotational direction of the first electric motor 120b.

Also, the controller 114 is connected to a pair of second electric motors 130a, 130b. The second electric motor 130a has a second rotor 132a which is connected to a second output shaft 136a via a one-way clutch 134a. The second output shaft 136a is connected to an axle of the front wheel 104a. An encoder 138a is disposed near the second electric motor 130a. Based on detection signals from the encoder 138a, the controller 114 calculates the number of revolutions and a rotational direction of the second electric motor 130a. Likewise, the second electric motor 130b has a second rotor 132b which is connected to the second output shaft 136b via a one-way clutch 134b. The second output shaft 136b is connected to an axle of the front wheel 104b. An encoder 138b is disposed near the second electric motor 130b. Based on detection signals from the encoder 138b, the controller 114 calculates the number of revolutions and a rotational direction of the second electric motor 130b.

The controller 114 is supplied with acceleration signals from an accelerator 140. The battery 110 is connected to a DC-DC converter 144 and auxiliary equipment 146 via a main switch 142.

In the electric driving system 108 described above, when the main switch 142 is turned ON, the controller 114 is started. On the other hand, when the main switch 142 is turned OFF, the controller 114 is stopped, and the electric driving system 108 of the electric four-wheel vehicle 100 is shut down. As described, an ON/OFF operation on the main switch 142 issues start/stop commands of the controller 114. The accelerator 140 sends a start command of the electric four-wheel vehicle 100. An acceleration signal according to an amount of operation of the accelerator 140 is supplied from the accelerator 140 to the controller 114. The controller 114 is supplied with electric power from the battery 110 via the BMS 112, whereby the controller 114 controls the pair of first electric motors 120a, 120b and the pair of second electric motors 130a, 130b. Therefore, the pair of first electric motors 120a, 120b and the pair of second electric motors 130a, 130b are powered by the battery 110 via the controller 114. The first output shaft 126a is driven by the first electric motor 120a via the first transmission section 124a, whereas the first output shaft 126b is driven by the first electric motor 120b via the first transmission section 124b. The second output shaft 136a is driven by the second electric motor 130a via the one-way clutch 134a, whereas the second output shaft 136b is driven by the second electric motor 130b via the one-way clutch 134b.

In the present embodiment, each of the one-way clutches 134a, 134b represents the second transmission section. The one-way clutch 134a does not transmit a driving force from the second output shaft 136a to the second rotor 132a, but transmits a driving force from the second rotor 132a to the second output shaft 136a. Likewise, the one-way clutch 134b does not transmit a driving force from the second output shaft 136b to the second rotor 132b, but transmits a driving force from the second rotor 132b to the second output shaft 136b. The connecting section, which electrically connects the first electric motor 120a and the second electric motor 130a with each other, includes the controller 114; AC wires 148a that connect the controller 114 and the first electric motor 120a with each other; and AC wires 148b that connect the controller 114 and second electric motor 130a with each other. Likewise, the connecting section, which electrically connects the first electric motor 120b and the second electric motor 130b with each other, includes the controller 114; AC wires 150a that connect the controller 114 and the first electric motor 120b with each other, and AC wires 150b that connect the controller 114 and the second electric motor 130b with each other. The controller 114 represents the control unit.

The electric four-wheel vehicle 100 which includes the electric driving system 108 described above offers substantially the same advantages as the electric two-wheel vehicle 10 which includes the electric driving system 30.

In the electric driving system 108, the first transmission section 124a directly connects the first rotor 122a and the first output shaft 126a with each other, and the first transmission section 124b directly connects the first rotor 122b and the first output shaft 126b with each other. These simplify a system configuration.

In the electric four-wheel vehicle 100, description was made for a case where the electric driving system 108 is divided into right and left sets, and the first electric motor 120a and the second electric motor 130a are grouped into one set whereas the first electric motor 120b and the second electric motor 130b are grouped into the other set. However, the present invention is not limited to this. There may be an arrangement that the first electric motor 120a and the second electric motor 130b are grouped into one set whereas the first electric motor 120b and the second electric motor 130a are grouped into the other set, i.e., the electric motors in diagonal positions are grouped into a set. Also, there may be an arrangement that three electric motors are directly connected to their respective output shafts, whereas one electric motor is connected to its output shaft via a clutch. A further arrangement may be that one electric motor is directly connected to an output shaft, and three electric motors are connected to output shafts via clutches respectively.

It should be noted here that in the embodiments described above, the clutch is provided by a one-way clutch. However, the present invention is not limited to this. The clutch may be provided by a centrifugal clutch or a solenoid clutch. In arrangements that the clutch is completely disengaged to turn the clutch OFF, the second electric motor 52 may be rotated in normal direction in the regeneration consumption mode shown in Fig. 7 and Fig. 11.

At least one transmission section of the first transmission section through the third transmission section must include a clutch. Preferably, at least the second transmission section, of the first transmission section through the third transmission section, includes a clutch.

An electric driving system included in an electric two-wheel vehicle according to an embodiment of the present invention may include four or more electric motors. In this case, one or more electric motors are provided with clutches according to an amount of electric power to be consumed by the electric driving system at times of regeneration.

The electric motors may be provided by axial gap type motors or radial gap type motors.

In the embodiments described above, the voltage sensor 40 and the current sensor 42 may be provided in the BMS 34.

In the electric two-wheel vehicles according to the embodiments described above, description was made for a case where the transmission section includes a speed reducer. However, the present invention is not limited to this. The transmission section need not necessarily include a speed reducer.

The speed reducer may include a belt instead of a chain. In the electric driving systems 30b through 30d shown in Fig. 15, Fig. 17 and Fig. 18, all the electric motors may be controlled by one controller. In the electric driving system 108 in Fig. 20, each of the electric motors may be provided with a controller.

The electric driving system according to the present invention is applicable to not only an electric two-wheel vehicle and an electric four-wheel vehicle, but also any transportation equipment such as marine vessels and airplanes.

### REFERENCE SIGNS LIST

- 10, 10a, 10b, 10c: Electric two-wheel vehicles
- 30, 30a, 30b, 30c, 30d, 108: Electric driving systems
- 32, 110: Batteries
- 36: First controller
- 38: Second controller
- 40, 116: Voltage sensors
- 42, 118: Current sensors
- 44, 120a, 120b: First electric driving motors
- 46, 122a, 122b: First rotors
- 48, 60, 88, 92: Speed reducers
- 50, 126a, 126b: First output shafts
- 52, 130a, 130b: Second electric driving motors
- 54, 132a, 132b: Second rotors
- 56, 134a, 134b: One-way clutches
- 58, 94: Output shafts
- 62, 90, 136a, 136b: Second output shafts
- 64, 66, 82, 128a, 128b, 138a, 138b: Encoders
- 68, 140: Accelerators
- 75a, 75b, 75d, 148a, 148b, 150a, 150b: AC wires
- 75c: DC wire
- 76: Third controller
- 78: Third rotor
- 80: Third electric driving motor
- 100: Electric four-wheel vehicle
- 114: Controller
- 124a, 124b: First transmission sections

## Claims

1. An electric driving system for an electric vehicle (10, 100) including a front wheel (26, 104a, 104b) and a rear wheel (28, 106a, 106b), the electric driving system comprising:
a driving power source (32, 110);
a first electric driving motor (44, 120a, 120b) powered by the driving power source (32, 110) and including a first rotor (46, 122a, 122b);
a second electric driving motor (52, 130a, 130b) powered by the driving power source (32, 110) and including a second rotor (54, 132a, 132b);
a first output shaft (50, 126a, 126b) driven by the first electric driving motor (44, 120a, 120b);
a second output shaft (62, 90, 136a, 136b) driven by the second electric driving motor (52, 130a, 130b);
a first transmission section (48, 92, 94, 124a, 124b) provided between the first rotor (46, 122a, 122b) and the first output shaft (50, 126a, 126b);
a second transmission section (56, 58, 60, 134a, 134b) provided between the second rotor (54, 132a, 132b) and the second output shaft (62, 90, 136a, 136b);
a connecting section (36, 38, 75a, 75b, 75c, 75d, 114, 148a, 148b, 150a, 150b) electrically connecting the first electric driving motor (44, 120a, 120b) and the second electric driving motor (52, 130a, 130b) with each other;
a charge state detecting section (34, 40, 112, 116) configured to detect a charge state of the driving power source (32, 110) ; and
a control unit (36, 38, 76, 114) configured to cause the second electric driving motor (52, 130a, 130b) to consume regenerated electric power from the first electric driving motor (44, 120a, 120b) when a detection result from the charge state detecting section (34, 40, 112, 116) satisfies a predetermined condition;
wherein the first transmission section (48, 92, 94, 124a, 124b) is arranged to cause the first rotor (46, 122a, 122b) and the first output shaft (50, 126a, 126b) to move together in two directions, and
wherein torque from the first output shaft (50, 126a, 126b) is supplied to an axle of the rear wheel (28, 106a, 106b), and torque from the second output shaft (62, 90, 136a, 136b) is supplied to an axle of the front wheel (26, 104a, 104b) or the axle of the rear wheel (28, 106a, 106b),
**characterized in that**
the second transmission section (56, 58, 60, 134a, 134b) is arranged not to transmit a driving force from the second output shaft (62, 90, 136a, 136b) to the second rotor (54, 132a, 132b), but to transmit a driving force from the second rotor (54, 132a, 132b) to the second output shaft (62, 90, 136a, 136b),
the electric driving system comprises a regeneration detecting section (34, 42, 112, 118) which is configured to detect whether or not the first electric driving motor (44, 120a, 120b) is in a regenerative operation, and
the control unit (36, 38, 76, 114) is configured to determine whether or not the first electric driving motor (44, 120a, 120b) is under a regeneration command, and to cause the second electric driving motor (52, 130a, 130b) to consume the regenerated electric power from the first electric driving motor (44, 120a, 120b) when a detection result from the regeneration detecting section (34, 42, 112, 118) indicates that regeneration is underway while there is no regeneration command issued for the first electric driving motor (44, 120a, 120b).

2. The electric driving system according to Claim 1, wherein the predetermined condition is a full-charge state.

3. The electric driving system according to Claim 1, wherein the control unit (36, 38, 76, 114) is configured to supply the second electric driving motor (52, 130a, 130b) with a reactive current which does not cause the second electric driving motor (52, 130a, 130b) to generate driving torque, when causing the second electric driving motor (52, 130a, 130b) to consume the regenerated electric power from the first electric driving motor (44, 120a, 120b).

4. The electric driving system according to Claim 1, wherein the control unit (36, 38, 76, 114) is configured to supply the second electric driving motor (52, 130a, 130b) with electricity so that the second rotor (54, 132a, 132b) is locked in a predetermined position and the second electric driving motor (52, 130a, 130b) does not rotate, when causing the second electric driving motor (52, 130a, 130b) to consume the regenerated electric power from the first electric driving motor (44, 120a, 120b).

5. The electric driving system according to Claim 1, wherein the control unit (36, 38, 76, 114) is configured to cause the second electric driving motor (52, 130a, 130b) to rotate in reverse direction, when causing the second electric driving motor (52, 130a, 130b) to consume the regenerated electric power from the first electric driving motor (44, 120a, 120b).

6. The electric driving system according to one of Claims 1 through 5, wherein the second transmission section includes a clutch (56, 134a, 134b) between the second rotor (54, 132a, 132b) and the second output shaft (62, 90, 136a, 136b).

7. The electric driving system according to Claim 6, wherein the first transmission section (48, 124a, 124b) directly connects the first rotor (46, 122a, 122b) and the first output shaft (50, 126a, 126b) with each other.

8. The electric driving system according to one of Claims 1 through 7, wherein the first electric driving motor (44, 120a, 120b) has a same output as the second electric driving motor (52, 130a, 130b), or has a smaller output than the second electric driving motor (52, 130a, 130b).

9. Transportation equipment comprising the electric driving system according to one of Claims 1 through 8.

## Patentansprüche

1. Ein elektrisches Antriebssystem für ein Elektrofahrzeug (10,100), das ein Vorderrad (26, 104a, 104b) und ein Hinterrad (28, 106a, 106b)umfasst, wobei das elektrische Antriebssystem folgende Merkmale aufweist:
eine Antriebsleistungsquelle (32, 110);
einen ersten elektrischen Antriebsmotor (44, 120a, 120b), der durch die Antriebsleistungsquelle (32, 110) mit Leistung versorgt wird und einen ersten Rotor (46, 122a, 122b) umfasst;
einen zweiten elektrischen Antriebsmotor (52, 130a, 130b), der durch die Antriebsleistungsquelle (32, 110) mit Leistung versorgt wird und einen zweiten Rotor (54, 132a, 132b) umfasst;
eine erste Ausgangswelle (50, 126a, 126b), die durch den ersten elektrischen Antriebsmotor (44, 120a, 120b) angetrieben wird;
eine zweite Ausgangswelle (62, 90, 136a, 136b), die durch den zweiten elektrischen Antriebsmotor (52, 130a, 130b) angetrieben wird;
einen ersten Übersetzungsabschnitt (48, 92, 94, 124a, 124b), der zwischen dem ersten Rotor (46, 122a, 122b) und der ersten Ausgangswelle (50, 126a, 126b) vorgesehen ist;
einen zweiten Übersetzungsabschnitt (56, 58, 60, 134a, 134b), der zwischen dem zweiten Rotor (54, 132a, 132b) und der zweiten Ausgangswelle (62, 90, 136a, 136b) vorgesehen ist;
einen Verbindungsabschnitt (36, 38, 75a, 75b, 75c, 75d, 114, 148a, 148b, 150a, 150b), der den ersten elektrischen Antriebsmotor (44, 120a, 120b) und den zweiten elektrischen Antriebsmotor (52, 130a, 130b) elektrisch miteinander verbindet;
einen Ladezustandserfassungsabschnitt (34, 40, 112, 116), der konfiguriert ist, um einen Ladezustand der Antriebsleistungsquelle (32, 110) zu erfassen; und
eine Steuereinheit (36, 38, 76, 114), die konfiguriert ist, um zu bewirken, dass der zweite elektrische Antriebsmotor (52, 130a, 130b) regenerierte elektrische Leistung von dem ersten elektrischen Antriebsmotor (44, 120a, 120b) verbraucht, wenn ein Erfassungsergebnis von dem Ladezustandserfassungsabschnitt (34, 40, 112, 116) eine vorbestimmte Bedingung erfüllt;
wobei der erste Übersetzungsabschnitt (48, 92, 94, 124a, 124b) angeordnet ist, um zu bewirken, dass sich der erste Rotor (46, 122a, 122b) und die erste Ausgangswelle (50, 126a, 126b) zusammen in zwei Richtungen bewegen und
wobei ein Drehmoment von der ersten Ausgangswelle (50, 126a; 126b) einer Achse des Hinterrads (28, 106a, 106b) zugeführt wird und ein Drehmoment von der zweiten Ausgangswelle (62, 90, 136a, 136b) einer Achse des Vorderrads (26, 104a, 104b) oder der Achse des Hinterrads (28, 106a, 106b) zugeführt wird,
**dadurch gekennzeichnet, dass**
der zweite Übersetzungsabschnitt (56, 58, 60, 134a, 134b) angeordnet ist, um keine Antriebskraft von der zweiten Ausgangswelle (62, 90, 136a, 136b) zu dem zweiten Rotor (54, 132a, 132b) zu übertragen, aber eine Antriebskraft von dem zweiten Rotor (54, 132a, 132b) zu der zweiten Ausgangswelle (62, 90, 136a, 136b) zu übertragen,
das elektrische Antriebssystem einen Regenerationserfassungsabschnitt (34, 42, 112, 118) aufweist, der konfiguriert ist, um zu erfassen, ob der erste elektrische Antriebsmotor (44, 120a, 120b) in einem regenerativen Betrieb ist oder nicht und
die Steuereinheit (36, 38, 76, 114) konfiguriert ist, um zu bestimmen, ob der erste elektrische Antriebsmotor (44, 120a, 120b) unter einem Regenerationsbefehl (34, 42, 112, 118) steht, und um zu bewirken, dass der zweite elektrische Antriebsmotor (52, 130a, 130b) die regenerierte elektrische Leistung von dem ersten elektrischen Antriebsmotor (44, 120a, 120b) verbraucht, wenn ein Erfassungsergebnis von dem Regenerationserfassungsabschnitt (34, 42, 112, 118) anzeigt, dass Regeneration im Gange ist, während für den ersten elektrischen Antriebsmotor (44, 120a, 120b) kein Regenerationsbefehl ausgegeben wurde.

2. Das elektrische Antriebssystem gemäß Anspruch 1, bei dem der vorbestimmte Zustand ein Vollladezustand ist.

3. Das elektrische Antriebssystem gemäß Anspruch 1, bei dem die Steuereinheit (36, 38, 76, 114) konfiguriert ist, um den zweiten elektrischen Antriebsmotor (52, 130a, 130b) mit einem Blindstrom zu versorgen, der nicht bewirkt, dass der zweite elektrische Antriebsmotor (52, 130a, 130b) ein Antriebsdrehmoment erzeugt, wenn der zweite elektrische Antriebsmotor (52, 130a, 130b) veranlasst wird, die regenerierte elektrische Leistung von dem ersten elektrischen Antriebsmotor (44, 120b, 120b) zu verbrauchen.

4. Das elektrische Antriebssystem gemäß Anspruch 1, bei dem die Steuereinheit (36, 38, 76, 114) konfiguriert ist, um den zweiten elektrischen Antriebsmotor (52, 130a, 130b) mit Elektrizität zu versorgen, so dass der zweite Rotor (54, 132a, 132b) in einer vorbestimmten Position verriegelt ist und der zweite elektrische Antriebsmotor (52, 130a, 130b) sich nicht dreht, wenn der zweite elektrische Antriebsmotor (52, 130a, 130b) veranlasst wird, die regenerierte elektrische Leistung von dem ersten elektrischen Antriebsmotor (44, 120a, 120b) zu verbrauchen.

5. Das elektrische Antriebssystem gemäß Anspruch 1, bei dem die Steuereinheit (36, 38, 76, 114) konfiguriert ist, um zu bewirken, dass sich der zweite elektrische Antriebsmotor (52, 130a, 130b) in umgekehrter Richtung dreht, wenn der zweite elektrische Antriebsmotor (52, 130a, 130b) veranlasst wird, die regenerierte elektrische Leistung von dem ersten elektrischen Antriebsmotor (44, 120a, 120b) zu verbrauchen.

6. Das elektrische Antriebssystem gemäß einem der Ansprüche 1 bis 5, bei dem der zweite Übersetzungsabschnitt eine Kupplung (56, 134a, 134b) zwischen dem zweiten Rotor (54, 132a, 132b) und der zweiten Ausgangswelle (62, 90, 136a, 136b) umfasst.

7. Das elektrische Antriebssystem gemäß Anspruch 6, bei dem der erste Übersetzungsabschnitt (48, 124a, 124b) den ersten Rotor (46, 122a, 122b) und die erste Ausgangswelle (50, 126a, 126b) direkt miteinander verbindet.

8. Das elektrische Antriebssystem gemäß einem der Ansprüche 1 bis 7, bei dem der erste elektrische Antriebsmotor (44, 120a, 120b) eine gleiche Ausgabe aufweist wie der zweite elektrische Antriebsmotor (52, 130a, 130b) oder eine kleinere Ausgabe aufweist als der zweite elektrische Antriebsmotor (52, 130a, 130b).

9. Transportausrüstung die das elektrische Antriebssystem gemäß einem der Ansprüche 1 bis 8 aufweist.

## Revendications

1. Système d'entraînement électrique pour véhicule électrique (10, 100) comportant une roue avant (26, 104a, 104b) et une roue arrière (28, 106a, 106b), le système d'entraînement électrique comprenant:
une source de puissance d'entraînement (32, 110);
un premier moteur d'entraînement électrique (44, 120a, 120b) alimenté par la source de puissance d'entraînement (32, 110) et comportant un premier rotor (46, 122a, 122b);
un deuxième moteur d'entraînement électrique (52, 130a, 130b) alimenté par la source de puissance d'entraînement (32, 110) et comportant un deuxième rotor (54, 132a, 132b);
un premier arbre de sortie (50, 126a, 126b) entraîné par le premier moteur d'entraînement électrique (44, 120a, 120b);
un deuxième arbre de sortie (62, 90, 136a, 136b) entraîné par le deuxième moteur d'entraînement électrique (52, 130a, 130b);
un premier segment de transmission (48, 92, 94, 124a, 124b) prévu entre le premier rotor (46, 122a, 122b) et le premier arbre de sortie (50, 126a, 126b);
un deuxième segment de transmission (56, 58, 60, 134a, 134b) prévu entre le deuxième rotor (54, 132a, 132b) et le deuxième arbre de sortie (62, 90, 136a, 136b);
un segment de connexion (36, 38, 75a, 75b, 75c, 75d, 114, 148a, 148b, 150a, 150b) connectant électriquement le premier moteur d'entraînement électrique (44, 120a, 120b) et le deuxième moteur d'entraînement électrique (52, 130a, 130b) l'un à l'autre;
un segment de détection d'état de charge (34, 40, 112, 116) configuré pour détecter un état de charge de la source de puissance d'entraînement (32, 110); et
une unité de commande (36, 38, 76, 114) configurée pour amener le deuxième moteur d'entraînement électrique (52, 130a, 130b) à consommer de l'énergie électrique régénérée du premier moteur d'entraînement électrique (44, 120a, 120b) lorsqu'un résultat de détection du segment de détection d'état de charge (34, 40, 112, 116) remplit une condition prédéterminée;
dans lequel le premier segment de transmission (48, 92, 94, 124a, 124b) est disposé de manière à provoquer que le premier rotor (46, 122a, 122b) et le premier arbre de sortie (50, 126a, 126b) se déplacent ensemble dans deux directions, et
dans lequel le couple du premier arbre de sortie (50, 126a, 126b) est alimenté vers un essieu de la roue arrière (28, 106a, 106b) et le couple du deuxième arbre de sortie (62, 90, 136a, 136b) est alimenté vers un essieu de la roue avant (26, 104a, 104b) ou l'essieu de la roue arrière (28, 106a, 106b),
**caractérisé par le fait que**
le deuxième segment de transmission (56, 58, 60, 134a, 134b) est disposé de manière à ne pas transmettre de force d'entraînement du deuxième arbre de sortie (62, 90, 136a, 136b) au deuxième rotor (54, 132a, 132b), mais à transmettre une force d'entraînement du deuxième rotor (54, 132a, 132b) au deuxième arbre de sortie (62, 90, 136a, 136b),
le système d'entraînement électrique comprend un segment de détection de régénération (34, 42, 112, 118) qui est configuré pour détecter si le premier moteur d'entraînement électrique (44, 120a, 120b) se trouve ou non en cours d'une opération de régénération, et
l'unité de commande (36, 38, 76, 114) est configurée pour déterminer si le premier moteur d'entraînement électrique (44, 120a, 120b) se trouve ou non sous une commande de régénération et pour amener le deuxième moteur d'entraînement électrique (52, 130a, 130b) à consommer l'énergie électrique régénérée du premier moteur d'entraînement électrique (44, 120a, 120b) lorsqu'un résultat de détection du segment de détection de régénération (34, 42, 112, 118) indique que la régénération est en cours tandis qu'il n'y a pas de commande de régénération délivrée pour le premier moteur électrique (44, 120a, 120b).

2. Système d'entraînement électrique selon la revendication 1, dans lequel la condition prédéterminée est un état de charge complète.

3. Système d'entraînement électrique selon la revendication 1, dans lequel l'unité de commande (36, 38, 76, 114) est configurée pour alimenter le deuxième moteur d'entraînement électrique (52, 130a, 130b) en courant réactif qui n'amène pas le deuxième moteur d'entraînement électrique (52, 130a, 130b) à générer un couple d'entraînement lorsque le deuxième moteur d'entraînement électrique (52, 130a, 130b) est amené à consommer l'énergie électrique régénérée du premier moteur d'entraînement électrique (44, 120a, 120b).

4. Système d'entraînement électrique selon la revendication 1, dans lequel l'unité de commande (36, 38, 76, 114) est configurée pour alimenter le deuxième moteur d'entraînement électrique (52, 130a, 130b) en électricité, de sorte que le deuxième rotor (54, 132a, 132b) soit verrouillé en une position prédéterminée et que le deuxième moteur d'entraînement électrique (52, 130a, 130b) ne tourne pas lorsque le deuxième moteur d'entraînement électrique (52, 130a, 130b) est amené à consommer l'énergie électrique régénérée du premier moteur d'entraînement électrique (44, 120a, 120b).

5. Système d'entraînement électrique selon la revendication 1, dans lequel l'unité de commande (36, 38, 76, 114) est configurée pour amener le deuxième moteur d'entraînement électrique (52, 130a, 130b) à tourner en direction inverse lorsque le deuxième moteur d'entraînement électrique (52, 130a, 130b) est amené à consommer l'énergie électrique régénérée du premier moteur d'entraînement électrique (44, 120a, 120b).

6. Système d'entraînement électrique selon l'une des revendications 1 à 5, dans lequel le deuxième segment de transmission comporte un embrayage (56, 134a, 134b) entre le deuxième rotor (54, 132a, 132b) et le deuxième arbre de sortie (62, 90, 136a, 136b).

7. Système d'entraînement électrique selon la revendication 6, dans lequel le premier segment de transmission (48, 124a, 124b) connecte directement le premier rotor (46, 122a, 122b) et le premier arbre de sortie (50, 126a, 126b).

8. Système d'entraînement électrique selon l'une des revendications 1 à 7, dans lequel le premier moteur d'entraînement électrique (44, 120a, 120b) présente la même sortie que le deuxième moteur d'entraînement électrique (52, 130a, 130b) ou présente une sortie qui est inférieure à celle du deuxième moteur électrique d'entraînement (52, 130a, 130b).

9. Equipement de transport comprenant le système d'entraînement électrique selon l'une des revendications 1 à 8.
